# FASCICULE DE BREVET EUROPEEN

(11) **EP 2 533 458 B1**
(45) Date de publication et mention de la délivrance du brevet: **23.05.2018**
(21) Numéro de dépôt: 12170733.5
(22) Date de dépôt: 04.06.2012
(51) Int. Cl.: H04L 9/08, H04W 12/04

(54) **Méthode de génération de clé secrète pour système de communication sans fil**
Verfahren zur Erstellung eines Geheimschlüssels für ein drahtloses Kommunikationssystem
Method of generating a secret key for a wireless communication system

(30) Priorité: 07.06.2011 FR 1154919
(43) Date de publication de la demande: 12.12.2012
(73) Titulaire: Commissariat à l'Énergie Atomique et aux Énergies Alternatives, 75015 Paris (FR)
(72) Inventeur: Hennebert, Christine, 38700 LA TRONCHE (FR)
(74) Mandataire: Augarde, Eric

(56) Documents cités:
- WO-A2-2006/081122
- WO-A2-2006/081306
- US-A1- 2007 036 353
- US-A1- 2007 165 845

## Description

### DOMAINE TECHNIQUE

La présente invention concerne de manière générale le domaine des communications sans fil et plus particulièrement celui des communications sans fil sécurisées par une clé secrète.

### ÉTAT DE LA TECHNIQUE ANTÉRIEURE

La sécurité des communications dans les réseaux sans fil a fait l'objet de nombreuses recherches.

Une première technique de sécurisation connue consiste à chiffrer les communications à l'aide d'un chiffrement à clé publique, par exemple au moyen de l'algorithme RSA ou d'un algorithme de cryptographie sur courbes elliptiques. Toutefois, cette technique nécessite d'échanger des clés publiques de grande longueur pour que le chiffrement puisse résister aux attaques éventuelles. En outre, les algorithmes mis en oeuvre sont complexes et utilisent d'importantes ressources de calcul qui sont rarement disponibles dans les terminaux mobiles.

Une autre technique de sécurisation connue consiste à chiffrer les communications à l'aide d'un chiffrement à clé secrète, par exemple au moyen de l'algorithme DES. La clé secrète doit être partagée entre la partie émettrice (conventionnellement appelée Alice) et la partie réceptrice (conventionnellement appelée Bob) et ne pas pouvoir être interceptée par un espion (*eavesdropper*) éventuel (conventionnellement appelé Eve). Cette technique suppose toutefois un accord préalable entre Bob et Alice sur une clé secrète qui n'est pas toujours réalisable en pratique. Qui plus est, la clé secrète doit pouvoir être renouvelée régulièrement, ce qui suppose que la clé secrète puisse elle-même être transmise de manière sécurisée.

Il a été récemment proposé d'utiliser les caractéristiques du canal de transmission sans fil entre les terminaux de Bob et Alice et de tirer parti à la fois de la réciprocité du canal et de sa forte décorrélation spatiale. Plus précisément, la réponse impulsionnelle du canal de transmission entre Bob et Alice est théoriquement identique, au bruit près, à celle du canal de transmission entre Alice et Bob. En revanche, dès lors que le terminal d'Eve est situé à plus d'une demi-longueur d'onde de celui de Bob, le canal de transmission entre Alice et Eve aura des caractéristiques décorrélées de celui entre Alice et Bob. Il n'est donc pas possible à Eve de remonter à la clé secrète en écoutant simplement le canal entre Alice et Bob. Enfin, le canal de transmission entre Alice et Bob est généralement sujet à des variations temporelles de ses caractéristiques notamment lorsque l'une ou l'autre des parties se déplace. La clé secrète peut ainsi être renouvelée fréquemment sans nécessité d'échange supplémentaire sur le canal de transmission.

On trouvera une description d'une méthode de génération de clé secrète à partir des caractéristiques du canal de transmission dans l'article de N. Patwari et al. intitulé « High rate uncorrelated bit extraction for shared secret key generation from channel measurements » publié dans IEEE Trans. on Mobile Computing, 2010, vol. 9, n° 1, pp. 17-30.

Une des principales difficultés relatives à cette méthode de génération de clé secrète réside cependant dans l'éventuelle absence d'accord entre Bob et Alice sur la clé générée.

En effet, tout d'abord, le canal de transmission entre les deux parties légitimes n'est pas rigoureusement identique en raison du bruit qui l'affecte.

En outre, si la transmission est de type TDD (*Time Division Duplex*), il se peut que les caractéristiques du canal de transmission aient légèrement évolué entre l'instant de la mesure du canal faite par Bob et l'instant de la mesure faite par Alice. De manière similaire, si le canal de transmission est de type FDD (*Frequency Division Duplex*) les caractéristiques fréquentielles du canal de transmission entre Alice et Bob peuvent ne pas être identiques à celles du canal inverse.

Du fait de la dissymétrie de canal introduite par le bruit et/ou le décalage temporel/fréquentiel mentionné ci-dessus, la clé générée par Bob n'est pas nécessairement identique à celle générée par Alice.

L'article de B. Azimi-Sadjadi et al. intitulé « Robust key generation from signal envelopes in wireless networks » publié dans Proceedings of ACM Conference on Computer and Communications Security 2007, pp. 401-410, a proposé un certain nombre de mesures pour obtenir un accord entre les parties légitimes sur la clé secrète générée, notamment l'utilisation d'un filtrage passe-bas pour réduire le bruit avant seuillage, suivi d'un extracteur flou.

L'article de S. Takayuki et al. intitulé « Reliability based sliced error correction in secret key agreement from fading channel » publié dans Proceedings of 2010 IEEE Wireless Communications and Networking Conference propose une méthode de correction glissante des erreurs d'estimation du canal de transmission en partant des bits de poids faible et en allant vers les poids forts, pour obtenir un consensus d'estimation et, par suite, un clé secrète commune.

Le document de Demande de Brevet US 2007/0165845 A1 déposé par Ye et al. et publié le 19 juillet 2007 expose un procédé où un premier terminal génère une série de bits de parité à partir d'une mesure de la réponse impulsionnelle du canal, et l'envoie à un deuxième terminal, qui à l'aide de ladite série ainsi que de sa propre mesure peut reconstruire la mesure du premier terminal, et en dériver un secret partagé.

Le document de Demande de Brevet US 2007/0036353 A1 déposé par Reznik et al. et publié le 19 juillet 2007 expose un autre procédé de génération de clé à partir d'une couple de mesures de réponse impulsionnelle du canal à l'aide d'un algorithme de codage. Les méthodes d'obtention de consensus sur une clé secrète commune décrites dans les articles précités sont toutefois complexes à mettre en oeuvre et conduisent fréquemment à répéter l'estimation de canal de part et d'autre de ce dernier avant d'arriver effectivement à un consensus.

L'objet de la présente invention est de proposer une méthode de génération de clé secrète à partir de caractéristiques du canal de transmission qui ne présente pas les inconvénients de l'art antérieur, en particulier qui soit robuste vis-à-vis du bruit et facile à mettre en oeuvre dans un terminal mobile.

Un objet subsidiaire de la présente invention est de proposer une méthode de génération de clé secrète mettant à profit le protocole HARQ type II (*Hybrid Automatic ReQuest*) couramment utilisé dans les standards WiMax et 3G LTE (*Long Term Evolution*).

### EXPOSÉ DE L'INVENTION

La présente invention est définie par une méthode de génération de clé secrète partagée entre un premier terminal et un second terminal, lesdits premier et second terminaux étant reliés par un canal de communication sans fil, le premier terminal effectuant une première estimation du dit canal et le second terminal effectuant une seconde estimation du dit canal, dans laquelle :
(a) un premier message représentant la première estimation est transmis par le premier terminal au second terminal, ledit premier message ayant été préalablement codé à l'aide d'un codage canal et poinçonné avec un premier motif de poinçonnage, à un taux de poinçonnage suffisamment élevé pour ne pas permettre son décodage ;
(b) un second message représentant la seconde estimation est stocké par le second terminal, ledit second message ayant été préalablement codé à l'aide du dit codage canal ;
(c) au moins une partie du second message est combinée au premier message pour décoder le premier message ; et
(d) si le décodage du premier message réussit, le second terminal détermine la clé secrète à partir du premier message ainsi décodé.

Selon un premier mode de réalisation de l'invention, si le décodage du premier message réussit, le second terminal transmet un acquittement au premier terminal et celui-ci détermine alors la clé secrète à partir du dit premier message.

Avantageusement, le premier terminal détermine la clé secrète en appliquant un traitement au premier message et le second terminal applique le même traitement au dit premier message décodé pour obtenir cette clé.

Si le décodage du premier message ne réussit pas, la seconde estimation de la réponse impulsionnelle est décalée d'au moins un échantillon et les étapes (b), (c), (d) ci-dessus sont répétées sur la base de la seconde estimation ainsi décalée.

Le décalage de la seconde estimation de la réponse impulsionnelle et la séquence des étapes (b), (c), (d) peut être itérée jusqu'à ce que le décodage du premier message réussisse ou bien que le décalage atteigne une valeur maximale prédéterminée.

Si le décalage atteint ladite valeur maximale sans que le décodage du premier message n'ait réussi, le second terminal envoie au premier terminal une requête de transmission d'un incrément de redondance.

L'incrément de redondance peut être constitué de bits qui avaient été poinçonnés par le premier motif de poinçonnage.

Dans ce cas, les étapes suivantes sont avantageusement effectuées :
(c') le second terminal combine au moins une partie du second message au premier message, préalablement complété par ledit incrément de redondance, et tente de décoder le premier message à partir de cette combinaison ;
(d') si le décodage du premier message réussit, le second terminal détermine la clé secrète à partir du premier message ainsi décodé.

Avantageusement, le premier terminal ne transmet l'incrément de redondance au second terminal que dans la mesure où le premier message complété par cet incrément de redondance reste indécodable.

Si le nouvel incrément de redondance rend le premier message décodable :
- ledit incrément de redondance n'est pas transmis par le premier terminal et celui-ci indique cette situation au second terminal ;
- les premier et second terminaux procèdent respectivement à de nouvelles première et seconde estimations de la réponse impulsionnelle du canal de transmission.

Selon un second mode de réalisation, le second message préalablement codé à l'aide du codage canal est poinçonné avec un second motif de poinçonnage à un taux de poinçonnage suffisamment élevé pour ne pas permettre son décodage, et le second message ainsi poinçonné est transmis au premier terminal.

Dans ce cas, les étapes suivantes sont avantageusement effectuées par le premier terminal :
- le premier terminal combine au moins une partie du premier message au second message pour décoder le second message ; et
- si le décodage du second message réussit, le premier terminal détermine la clé secrète à partir du second message ainsi décodé, pour autant qu'il n'ait pas préalablement reçu un acquittement du second terminal, et transmet un message d'acquittement au second terminal ;
- le premier terminal détermine la clé secrète à partir dudit premier message, s'il a reçu un message d'acquittement du second terminal.

De manière symétrique, les étapes suivantes sont avantageusement effectuées par le second terminal :
- le second terminal combine au moins une partie du second message au premier message pour décoder le premier message; et
- si le décodage du premier message réussit, le second terminal détermine la clé secrète à partir du premier message ainsi décodé, pour autant qu'il n'ait pas préalablement reçu un acquittement du premier terminal, et transmet un message d'acquittement au premier terminal ;
- le second terminal détermine la clé secrète à partir dudit second message, s'il a reçu un message d'acquittement du premier terminal.

Un CRC peut être calculé et concaténé au premier/second message avant le codage canal, le poinçonnage et la transmission par le premier/second terminal, et la réussite du décodage du premier/second message par le second/premier terminal est déterminée en comparant le CRC calculé sur la base du premier/second message reçu avec le CRC concaténé.

Alternativement, un CRC est calculé sur la base du premier/second message avant le codage canal et le poinçonnage, puis concaténé au message ainsi poinçonné avant transmission et la réussite du décodage du premier/second message est déterminée en comparant le CRC calculé sur la base du premier/second message avec le CRC concaténé.

### BRÈVE DESCRIPTION DES DESSINS

D'autres caractéristiques et avantages de l'invention apparaîtront à la lecture d'un mode de réalisation préférentiel de l'invention, fait en référence aux figures jointes parmi lesquelles :
La Fig. 1 représente schématiquement la méthode de génération de clé secrète selon un premier mode de réalisation de l'invention ;
La Fig. 2 représente schématiquement la méthode de génération de clé secrète selon un second mode de réalisation de l'invention ;
La Fig. 3 représente schématiquement l'hypothèse d'un échec de décodage d'un message reçu dans la Fig. 1 ou la Fig. 2 ;
La Fig. 4 représente schématiquement un exemple de mise en oeuvre de la méthode de génération de clé secrète dans un terminal émetteur ;
La Fig. 5 représente schématiquement un exemple de mise en oeuvre de la méthode de génération de clé secrète dans un terminal récepteur.

### EXPOSÉ DÉTAILLÉ DE MODES DE RÉALISATION PARTICULIERS

Nous considérons dans la suite un système de communication sans fil comprenant au moins un premier terminal et un second terminal. Par terminal nous entendons ici un équipement de communication fixe ou mobile. Le système de communication sans fil peut être cellulaire ou non. Il peut être notamment un réseau de téléphonie mobile, un réseau ad *hoc,* un réseau de capteurs, un réseau d'objet communicants, etc. Par terminal, on entend un équipement de communication au sens large par exemple un terminal d'utilisateur, une station de base, un capteur, un objet communicant etc.

La communication entre les premier et second terminaux utilise dans tous les cas un canal de transmission sans fil. Un tel canal est généralement sélectif en temps et/ou en fréquence, autrement dit sa réponse impulsionnelle présente des évanouissements temporels et/ou fréquentiels. Par exemple, le canal peut être un canal à évanouissements de type Rayleigh lorsque l'un ou l'autre des terminaux est un terminal mobile.

La communication entre le premier et le second terminal peut être unidirectionnelle ou bidirectionnelle. Dans ce dernier cas, la communication dans un sens utilise des ressources de transmission (intervalles de temps de transmissions, fréquences, intervalles de sous-porteuses, codes orthogonaux) différentes de celles utilisées par la communication en sens inverse. Par exemple dans une communication TDD, les intervalles de temps de transmission (TTI) diffèrent pour les deux sens ; pour une communication FDD ce sont les fréquences de transmission qui diffèrent.

Du fait de l'utilisation de ressources de transmission différentes, les caractéristiques du canal de transmission peuvent différer selon le sens de transmission. En pratique, ces caractéristiques diffèrent cependant relativement peu, soit parce que la séparation temporelle entre les deux intervalles de transmission est inférieure au temps de cohérence du canal, soit parce que les deux fréquences de transmission sont voisines.

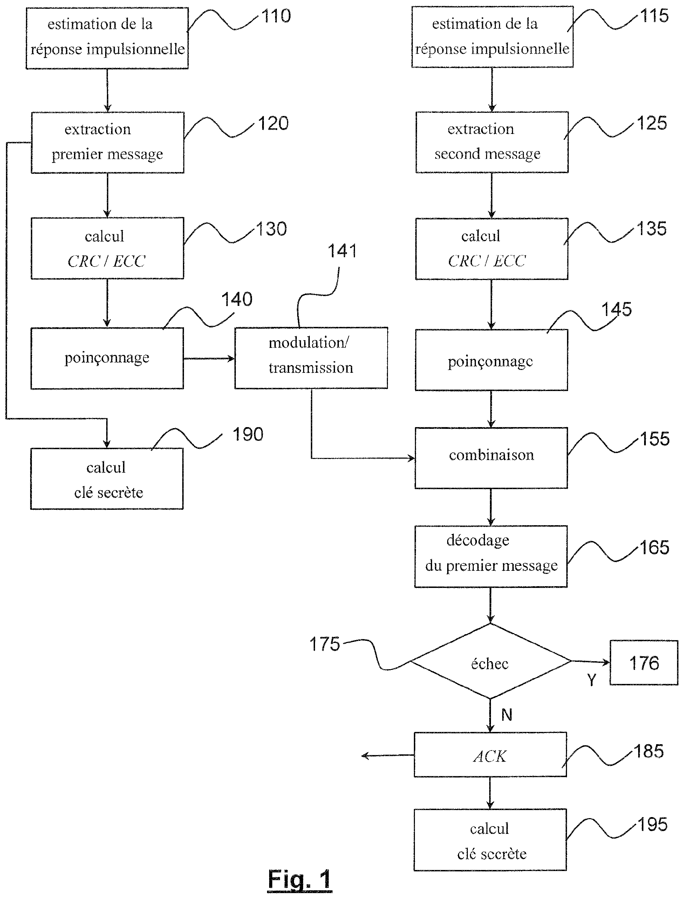

La Fig. 1 représente schématiquement une méthode de génération de clé secrète, partagée par les premier et second terminaux du système de communication sans fil.

Dans une première étape, 110, le premier terminal effectue une mesure de la réponse impulsionnelle du canal de transmission, de manière connue en soi. Pour ce faire, le second terminal transmet une séquence de symboles pilote. Cette séquence de symboles pilote peut être transmise au sein d'un même intervalle de transmission ou sur plusieurs intervalles de transmission successifs. Par réponse impulsionnelle, on entend ici soit la réponse impulsionnelle au sens strict, soit simplement la séquence reçue par le premier terminal, c'est-à-dire la convolution de cette réponse impulsionnelle avec la séquence de symboles pilote transmises par le second terminal. La réponse impulsionnelle du canal de transmission se présente sous la forme d'une séquence d'échantillons.

Dans une seconde étape, 120, le premier terminal effectue un traitement de la réponse impulsionnelle pour en extraire un message représentant cette réponse, dénommé ci-après premier message. Le traitement peut notamment comprendre un filtrage passe-bas pour éliminer le bruit, un contrôle automatique de gain (AGC), une quantification, une compression d'information, une transformée de Fourier, etc.

A l'étape 130, le premier terminal effectue un codage du premier message ainsi obtenu à l'aide d'un code correcteur d'erreur ECC (*Error Correcting Code*). Avantageusement, le premier message est d'abord codé à l'aide d'un code de détection d'erreur, par exemple à l'aide d'un code de contrôle de parité CRC (*Cyclic Redundancy Check*). Le codage ECC peut alors porter sur le message d'origine concaténé au code CRC. Alternativement, le codage ECC porte sur le premier message sans CRC et le CRC est concaténé au message obtenu par codage ECC.

Le codage ECC peut être par exemple un codage de type Reed-Solomon, un codage LDPC (*Low Density Parity Code*) voire un turbo-codage.

A l'étape 140, le premier message ainsi codé est poinçonné à l'aide d'un motif de poinçonnage présentant un taux de poinçonnage suffisamment élevé pour interdire son décodage à la réception. Par exemple si le codage est de type systématique, les bits systématiques peuvent être tous poinçonnés. De préférence, seuls certains seront poinçonnés mais en nombre suffisant pour excéder la capacité de correction du code ECC utilisé. Ainsi, un terminal espion quelconque (Eve) interceptant la communication sera incapable de reconstituer le message d'origine.

Le premier message est modulé puis transmis par le premier terminal en 141. Après réception, celui-ci est démodulé par le second terminal et dépoinçonné. Le dépoinçonnage consiste à traiter les bits manquants comme des effacements, autrement dit à leur attribuer une valeur souple indiquant une absence d'information a *priori* (en pratique LLR nulle).

De manière similaire, le second terminal effectue une estimation de la réponse impulsionnelle du canal de transmission en 115 (à l'aide d'une séquence de symbole pilote transmis par le premier terminal, la réponse impulsionnelle du canal se présentant sous la forme d'une séquence d'échantillons comme en 110), un traitement de cette réponse en 125 pour en extraire un second message représentatif de cette réponse, un codage de correction d'erreur ECC en 135 (avec avantageusement codage CRC préalablement au codage ECC). Les étapes 115, 125 et 135 effectuées par le second terminal sont respectivement identiques aux étapes 110, 120 et 130 effectuées par le premier terminal. En particulier, le codage ECC, et le cas échéant le codage CRC sont identiques à ceux utilisés en 130. En outre, lorsqu'un codage CRC est prévu préalablement au codage ECC en 130, le même codage CRC est effectué préalablement au codage ECC en 135. En revanche, lorsque le code CRC est concaténé après le code ECC en 130, le codage CRC n'est pas nécessaire en 135. Selon une variante, une étape de poinçonnage 145 peut être prévue. Lorsque celle-ci est présente, le motif de poinçonnage utilisé en 145 est avantageusement disjoint de celui utilisé en 140.

Le second message ainsi généré est stocké au niveau du second terminal. A l'étape 155, le second terminal combine au moins une partie du second message au premier message reçu du premier terminal.

Le premier message est constitué de bits souples, typiquement sous la forme de logarithmes de rapport de vraisemblance (LLRs). Le second message est également constitué de bits souples, mais à la différence du premier message, les valeurs souples positives et négatives peuvent être fixes dans la mesure où le second message peut être considéré comme déterministe (pas de propagation sur le canal de transmission). Dans certains cas, le second message pourra être codé avec des valeurs « probabilistes ». Par exemple si un bit représente le franchissement d'une valeur de seuil prédéterminée, la valeur souple pourra représenter le rapport entre la valeur d'origine et la valeur de seuil. Ainsi, si le traitement en 125 comprend le seuillage de la réponse impulsionnelle (pour localiser les évanouissements), une valeur souple du second message pourra être calculée comme le rapport entre l'amplitude (préalablement normalisée) de la réponse avec le seuil en question. En revanche, si un mot binaire du second message (et du premier message) représente la position temporelle d'un évanouissement, des valeurs souples fixes seront utilisées.

La combinaison du premier message et d'au moins une partie du second message est réalisée comme suit : Si un bit est poinçonné à la fois dans le premier message et le second message, le bit résultant de la combinaison est un effacement (représenté par une LLR de valeur nulle). Si un bit est poinçonné dans le premier message mais ne l'est pas dans le second message, le bit du premier message est remplacé par le bit correspondant du second message. De manière équivalente, la valeur poinçonnée dans le premier message (le bit poinçonné est assimilé à un effacement et donc à une LLR de valeur nulle) est additionnée à la valeur du bit correspondant dans le second message. Enfin, si le bit est présent dans les deux messages, la valeur souple du premier message est additionnée à la valeur souple du second message.

Après que le second message a été combiné au moins en partie au premier message, celui-ci fait l'objet d'une première tentative de décodage en 165.

Il est important de noter ici que le second message n'a pour fonction que d'aider au décodage du premier message et non l'inverse. Autrement dit, l'information présente dans le second message permet simplement de compléter l'information manquante dans le premier message, due au poinçonnage.

Si le décodage échoue en 165 (c'est-à-dire si le code ECC ne peut corriger les erreurs affectant le message) ou encore si le CRC calculé sur le message décodé indique la présence d'une erreur résiduelle, comme représenté à l'étape de test 175, l'algorithme se poursuit en 176. En revanche, si le décodage réussit, avec confirmation éventuelle par calcul du CRC, un acquittement est transmis au premier terminal en 185 et la clé secrète est calculée en 195.

La clé secrète est obtenue à partir du premier message décodé en 165. Elle peut être simplement identique au message décodé ou être le résultat d'un sous-échantillonnage de ce message. Elle peut alternativement être extraite de ce message au moyen d'un traitement destiné à en éliminer la redondance, autrement dit d'un algorithme de compression d'information. Par exemple, elle pourra être obtenue comme résidu de filtrage du premier message décodé au moyen d'un filtre auto-adaptatif.

En parallèle, si le premier terminal reçoit un acquittement de décodage, il génère en 190 la clé secrète à partir du premier message d'origine (tel qu'obtenu en 120) au moyen d'un traitement identique à celui subi par le premier message décodé en 195. La clé secrète ainsi générée est donc commune aux deux terminaux et peut être utilisée pour chiffrer une communication à l'aide d'un algorithme de cryptographie symétrique tel que, par exemple, 3DES ou RC4.

Si besoin est, la clé secrète pourra être renouvelée à l'aide de la même méthode de génération. Les caractéristiques du canal de transmission varient généralement au cours du temps, soit à cause d'un déplacement relatif des deux terminaux, soit à cause d'une évolution de leur environnement, la nouvelle clé ainsi obtenue étant décorrélée de la précédente.

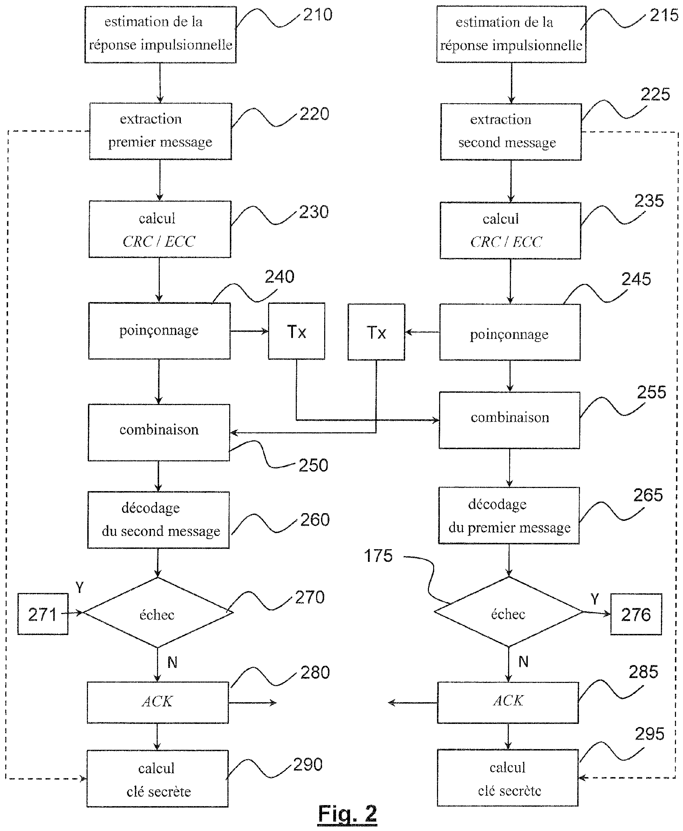

La Fig. 2 représente schématiquement un second mode de réalisation de la méthode de génération de clé secrète selon l'invention.

A la différence du premier mode de réalisation, le second message est transmis par le second terminal au premier terminal pour déterminer une clé secrète commune.

Les étapes 210, 220, 240, 241 effectuées par le premier terminal sont respectivement identiques aux étapes 110, 120, 130, 141 de la Fig. 1 et ne seront donc pas décrites à nouveau ici. De manière similaire, les étapes 215, 225, 235, 245, 255, 265, 275-276, 285, 295 sont respectivement identiques aux étapes 115, 125, 135, 145, 165, 175-176, 185 et 195.

La clé secrète obtenue à l'étape 295 est dénommée première clé secrète dans le second mode de réalisation.

En outre, l'étape 145 de poinçonnage n'est ici pas optionnelle et le motif de poinçonnage qui y est appliqué présente un taux de poinçonnage suffisamment élevé pour que le second message poinçonné ne puisse être décodé par un récepteur. Ainsi, un terminal tiers interceptant la communication entre le second terminal et le premier terminal serait dans l'incapacité de remonter au second message d'origine. On rappelle en outre que le motif de poinçonnage utilisé pour poinçonner le second message est de préférence disjoint de celui utilisé pour poinçonner le premier message.

Après poinçonnage, le second message est modulé et transmis par le second terminal sur le canal de transmission. Ce message est reçu par le premier terminal, démodulé et dépoinçonné, comme expliqué plus haut.

Le premier message obtenu en 220 est ensuite combiné au moins en partie en 250 au second message ainsi dépoinçonné. La combinaison est réalisée de manière symétrique à celle réalisée en 255. En particulier, l'information manquante dans le second message est complétée par celle contenue dans le premier message.

Après la combinaison, il est procédé à une première tentative de décodage du second message en 260. Si l'on détecte en 270 que le décodage échoue, par incapacité de correction du code ECC ou par détection d'une erreur résiduelle dans le message décodé au moyen du CRC (lorsque celui-ci est présent, la méthode de génération se poursuit à l'étape 271).

En revanche, si le décodage réussit, avec confirmation éventuelle par calcul du CRC, un acquittement est transmis au second terminal en 280 et une seconde clé secrète est calculée en 290.

La clé secrète commune est obtenue par compétition entre le calcul de la première clé secrète et de la seconde clé secrète. Plus précisément, le terminal recevant le premier un acquittement de l'autre terminal interrompt le décodage du message reçu (premier ou second message selon le cas) et génère alors localement la clé secrète commune à partir du message d'origine comme il a été expliqué à l'étape 190.

Plus précisément, si le décodage du premier message est plus rapide que celui du second message, l'acquittement émis en 285 interrompra le processus de décodage du second message dans le premier terminal. Celui-ci génèrera alors la clé commune à partir du premier message d'origine (tel qu'obtenu en 220), comme représenté par la flèche en pointillés sur la partie gauche de la figure.

De manière symétrique, si le décodage du second message est plus rapide que celui du premier message, l'acquittement émis en 280 interrompra le processus de décodage du premier message dans le second terminal. Celui-ci génèrera alors la clé commune à partir du second message d'origine (tel qu'obtenu en 225), comme représenté par la flèche en pointillés sur la partie droite de la figure.

Ainsi, dès que le décodage du premier message ou du second message réussit, une clé secrète commune est obtenue. La communication entre les deux terminaux peut alors être chiffrée au moyen d'un algorithme de cryptographie symétrique comme indiqué plus haut.

Un terminal espion (Eve) qui intercepterait le premier ou le second message serait dans l'incapacité de le décoder. En outre, s'il essayait de compléter l'information reçue dans le message intercepté à partir de sa propre mesure de réponse impulsionnelle du canal de transmission pour procéder à un décodage du message, ce décodage serait voué à l'échec dans la mesure où le canal de transmission entre le premier/second terminal et le terminal espion présenterait nécessairement une réponse différente de celle du canal séparant les premier et second terminaux.

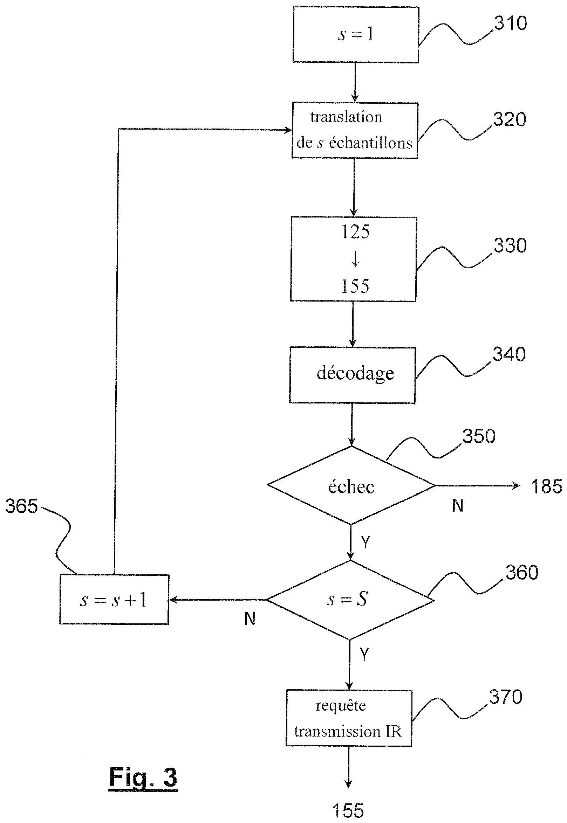

Lorsque le décodage du premier message échoue en 175 ou 275, ou bien lorsque le décodage du second message échoue en 270, le procédé de génération de clé secrète se poursuit comme indiqué en Fig. 3.

La Fig. 3 représente schématiquement le déroulement de la méthode de génération de clé secrète en cas d'échec de décodage d'un message dans la Fig. 1 (cf. étape 176) ou la Fig. 2 (cf. étape 271 ou 276).

Nous supposerons ci-après, à titre d'illustration, que le décodage du premier message a échoué en 175, dans le premier mode de réalisation. Il est toutefois clair qu'en cas d'échec du décodage du premier message en 275 ou du second message en 270, dans le second mode de réalisation, on procéderait de manière similaire.

Tout d'abord, si le nombre d'erreurs excède la capacité de correction du code ECC ou si le CRC calculé à partir du message décodé indique la présence d'une erreur, on teste si l'origine de ces erreurs n'est pas due à un glissement de la réponse impulsionnelle telle qu'estimée en 115 par rapport à celle estimée en 110. En effet, il est possible qu'un décalage temporel (TDD) ou fréquentiel (FDD) entre les deux sens de liaison induise un glissement de quelques échantillons de la réponse impulsionnelle du canal de transmission.

Si l'on note *S* le décalage maximal que l'on tolère entre les deux réponses impulsionnelles estimées en 110 et 115, on vérifie si une translation de *s*=1,...,*S* échantillons de la seconde réponse impulsionnelle par rapport à la première permet de corriger le premier message.

Pour ce faire, on initialise tout d'abord en 310 le décalage à *s*=1 échantillon et on translate la seconde réponse impulsionnelle de *s* échantillon(s) en 320. On effectue à nouveau en 330 les étapes 125 à 155 sur la base de la réponse impulsionnelle ainsi translatée.

On procède à une nouvelle tentative de décodage en 340. Comme représenté en 350, si le décodage réussit, on retourne à l'étape 185 (Fig. 1), autrement dit un acquittement de décodage est transmis au premier terminal et la clé secrète est calculée en 195. En revanche, si le décodage échoue à nouveau, on teste en 360 si *s*=*S*.

Si ce n'est pas le cas, on incrémente le décalage en 365 et l'on retourne à l'étape 320 pour une nouvelle translation et une nouvelle tentative de décodage sur la base de la réponse impulsionnelle translatée, 330 et 340.

En revanche, si *s*=*S* mais que le décodage n'a toujours pas réussi, le second terminal remet le décalage à zéro (*s*=0) et envoie en 370 une requête au premier terminal afin qu'il transmette un nouvel incrément de redondance. Cet incrément de redondance est constitué par une pluralité de bits éliminés lors de l'étape de poinçonnage 140. L'homme du métier comprendra que l'envoi d'incréments successifs de redondance ne nécessitera pas de modification substantielle du terminal si celui-ci est capable de fonctionner selon le protocole HARQ de type II.

Avant de faire droit à la requête précitée, le premier terminal vérifie que l'ensemble constitué par le premier message envoyé et l'incrément de redondance demandé ne permet toujours pas de décoder le premier message d'origine. A défaut, il ne transmet pas cet incrément et, le cas échéant, en avertit le second terminal.

La méthode se poursuit en retournant à l'étape 155 dans laquelle au moins une partie du second message est combinée au premier message complété par l'incrément de redondance. En cas de nouvel échec de décodage, on effectue à nouveau un glissement de la réponse impulsionnelle mesurée en 115 par des décalages successifs jusqu'à ce que le décodage réussisse ou que l'on atteigne à nouveau la valeur maximale de décalage *s*=*S.* Dans ce dernier cas, le second terminal transmet une nouvelle requête de transmission d'incrément de redondance et la nouvelle combinaison effectuée en 155 porte sur le premier message complété par les incréments de redondance successifs.

Vu du premier terminal, un nouvel incrément de redondance est transmis à chaque fois qu'une requête est reçue, à condition cependant que le premier message poinçonné et complété par les incréments successifs reste indécodable. On comprend ainsi qu'un terminal tiers, qui intercepterait la version poinçonnée de ce message ainsi que des incréments de redondance successifs, ne serait pas à même de générer la clé secrète. Si la transmission d'un nouvel incrément permet de décoder le premier message (sous entendu sans apport d'information supplémentaire, telle que celle fournie par le second message), le nouvel incrément n'est pas transmis et le procédé de génération de clé secrète reprend depuis le début avec l'estimation de la réponse impulsionnelle du canal de transmission par le premier terminal en 110 et le second terminal en 115.

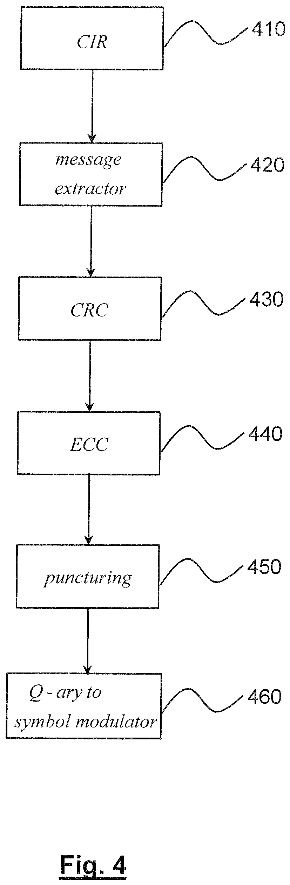

La Fig. 4 représente schématiquement un exemple de mise en oeuvre de la méthode de génération de clé secrète dans le premier terminal, jouant ici le rôle de terminal émetteur.

Le terminal en question comprend un module d'estimation de la réponse impulsionnelle du canal de transmission, 410. Comme déjà indiqué plus haut, la réponse impulsionnelle peut ne pas être déconvoluée autrement dit représenter la réponse du canal à une séquence de symboles pilote.

Le module de traitement 420 transforme la réponse impulsionnelle en un message représentatif de celle-ci.

Le message peut faire optionnellement l'objet d'un calcul de code de contrôle d'erreur (CRC) en 430, le CRC étant alors concaténé au message, de manière connue en soi.

Le message, ainsi que, le cas échéant, son CRC concaténé, est codé à l'aide d'un code correcteur d'erreur (ECC) dans le module de codage 440. Le message ainsi codé est poinçonné par le module poinçonnage 450. Les bits poinçonnés sont stockés dans une mémoire 455 et peuvent être transmis par paquets (incréments de redondance) sur requête.

Enfin, le message poinçonné est modulé par un modulateur *Q*-aire à symbole 460 avant d'être transmis sur le canal de transmission.

Le terminal comprend en outre un module de calcul 470 déterminant une clé secrète à partir du message fourni par le module de traitement 420.

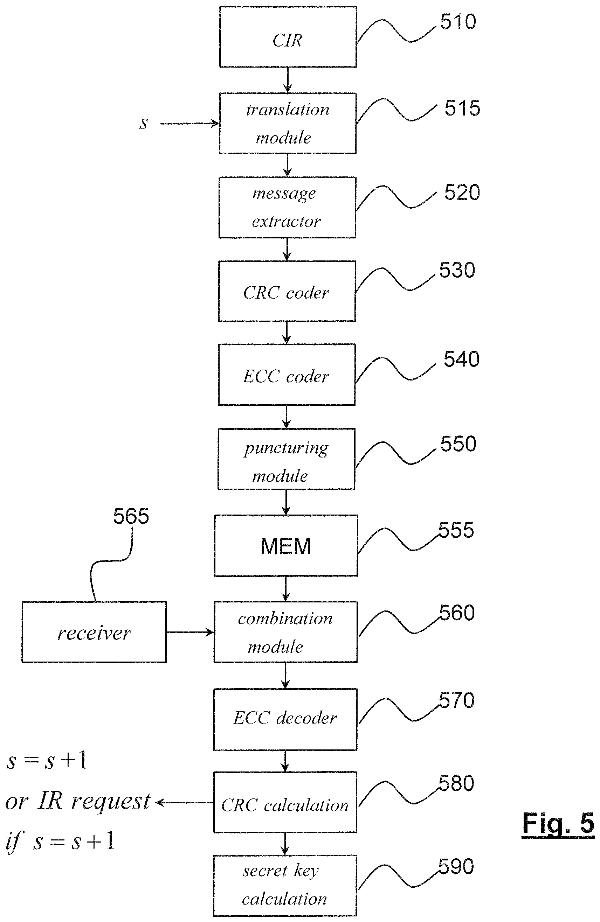

La Fig. 5 représente schématiquement un exemple de mise en oeuvre de la méthode de génération de clé secrète dans le second terminal, jouant ici le rôle de terminal récepteur.

Le premier terminal comprend un module d'estimation de réponse impulsionnelle, 510, un module de traitement 520, un module optionnel de calcul de CRC, 530, un module de codage ECC, 540 et un module de poinçonnage 550. Les modules 510-540 sont respectivement identiques aux modules 410-440, à la différence près que le motif de poinçonnage utilisé en 550 est disjoint de celui utilisé en 450. En outre, un module de translation 515 est disposé entre le module d'estimation 510 et le module de traitement 520. Ce module translate la réponse impulsionnelle estimée de *s* échantillons. A chaque nouvelle estimation, la valeur de décalage *s* est remise à zéro.

La séquence de bits formant le second message est stockée en 555. Elle est combinée au moins en partie en 560 avec le premier message reçu du premier terminal par le récepteur 565. Le module de combinaison effectue par exemple une addition des LLRs comme expliqué plus haut.

Enfin, le message issu de la combinaison fait l'objet d'un décodage ECC en 570 et d'un calcul de CRC en 580. Si le message est décodable et que le CRC est identique à celui concaténé, le module de calcul 590 détermine la clé secrète à partir du message décodé. A l'inverse, si le message ne peut être décodé ou si le CRC calculé est faux, la valeur de décalage en entrée du module 515 est incrémentée. La méthode de génération se poursuit en 520 sur la base de la réponse impulsionnelle translatée. Si la valeur de décalage incrémentée excède le décalage maximal *S*, une requête de transmission d'incrément de redondance est envoyée au premier terminal. L'incrément de redondance est combiné avec ladite partie du second message en 560.

L'homme du métier comprendra que la méthode de génération de clé secrète selon l'invention fait appel à des modules généralement implémentés dans un terminal sans fil mettant en oeuvre un protocole de transmission HARQ de type II (IR-HARQ). Elle pourra donc être déployée sans grande difficulté dans les terminaux existants.

## Revendications

1. Méthode de génération de clé secrète partagée entre un premier terminal et un second terminal, lesdits premier et second terminaux étant reliés par un canal de communication sans fil, le premier terminal effectuant (110) une première estimation du dit canal et le second terminal effectuant (115) une seconde estimation du dit canal, où :
(a) un premier message représentant (120) la première estimation est transmis par le premier terminal au second terminal (141), ledit premier message ayant été préalablement codé (130) à l'aide d'un codage canal et poinçonné (140) avec un premier motif de poinçonnage, à un taux de poinçonnage suffisamment élevé pour ne pas permettre son décodage ;
(b) un second message représentant (125) la seconde estimation est stocké par le second terminal, ledit second message ayant été préalablement codé (135) à l'aide du dit codage canal ;
(c) ledit second message est combiné (155) au premier message pour décoder (165) le premier message ; et
(d) si le décodage du premier message réussit, le second terminal détermine la clé secrète (195) à partir du premier message ainsi décodé.

2. Méthode de génération de clé secrète selon la revendication 1, **caractérisée en ce que** si le décodage du premier message réussit, le second terminal transmet un acquittement au premier terminal et celui-ci détermine alors la clé secrète à partir du dit premier message.

3. Méthode de génération de clé secrète selon la revendication 2, **caractérisée en ce que** le premier terminal détermine la clé secrète en appliquant un traitement au premier message et que le second terminal applique le même traitement au dit premier message décodé pour obtenir cette clé.

4. Méthode de génération de clé secrète selon la revendication 1, **caractérisée en ce que** la première et la seconde estimations de la réponse impulsionnelle se présentent sous la forme d'une séquence d'échantillons et que, si le décodage du premier message ne réussit pas, la seconde estimation de la réponse impulsionnelle est décalée d'au moins un échantillon par rapport à la première, et que les étapes (b), (c), (d) sont répétées sur la base de la seconde estimation ainsi décalée.

5. Méthode de génération de clé secrète selon la revendication 4, **caractérisée en ce que** le décalage de la seconde estimation de la réponse impulsionnelle et la séquence des étapes (b), (c), (d) est itérée jusqu'à ce que le décodage du premier message réussisse ou bien que le décalage atteigne une valeur maximale prédéterminée.

6. Méthode de génération de clé secrète selon la revendication 5, **caractérisée en ce que** si le décalage atteint ladite valeur maximale sans que le décodage du premier message n'ait réussi, le second terminal envoie au premier terminal une requête de transmission d'un incrément de redondance.

7. Méthode de génération de clé secrète selon la revendication 6, **caractérisée en ce que** l'incrément de redondance est constitué de bits qui avaient été poinçonnés par le premier motif de poinçonnage.

8. Méthode de génération de clé secrète selon la revendication 7, **caractérisée en ce que**
(c') le second terminal combine au moins une partie du second message au premier message, préalablement complété par ledit incrément de redondance, et tente de décoder le premier message à partir de cette combinaison ;
(d') si le décodage du premier message réussit, le second terminal détermine la clé secrète à partir du premier message ainsi décodé.

9. Méthode de génération de clé secrète selon la revendication 8, **caractérisée en ce que** le premier terminal ne transmet l'incrément de redondance au second terminal que dans la mesure où le premier message complété par cet incrément de redondance reste indécodable.

10. Méthode de génération de clé secrète selon la revendication 9, **caractérisée en ce que** si le nouvel incrément de redondance rend le premier message décodable :
- ledit incrément de redondance n'est pas transmis par le premier terminal et celui-ci indique cette situation au second terminal ;
- les premier et second terminaux procèdent respectivement à de nouvelles première et seconde estimations de la réponse impulsionnelle du canal de transmission.

11. Méthode de génération de clé secrète selon la revendication 1, **caractérisée en ce que** le second message préalablement codé à l'aide du codage canal est poinçonné avec un second motif de poinçonnage à un taux de poinçonnage suffisamment élevé pour ne pas permettre son décodage et que le second message ainsi poinçonné est transmis au premier terminal.

12. Méthode de génération de clé secrète selon la revendication 11, **caractérisée en ce que** :
- le premier terminal combine au moins une partie du premier message au second message pour décoder le second message ; et
- si le décodage du second message réussit, le premier terminal détermine la clé secrète à partir du second message ainsi décodé, pour autant qu'il n'ait pas préalablement reçu un acquittement du second terminal, et transmet un message d'acquittement au second terminal ;
- le premier terminal détermine la clé secrète à partir dudit premier message, s'il a reçu un message d'acquittement du second terminal.

13. Méthode de génération de clé secrète selon la revendication 11 ou 12, **caractérisée en ce que** :
- le second terminal combine au moins une partie du second message au premier message pour décoder le premier message; et
- si le décodage du premier message réussit, le second terminal détermine la clé secrète à partir du premier message ainsi décodé, pour autant qu'il n'ait pas préalablement reçu un acquittement du premier terminal, et transmet un message d'acquittement au premier terminal ;
- le second terminal détermine la clé secrète à partir dudit second message, s'il a reçu un message d'acquittement du premier terminal.

14. Méthode de génération de clé secrète selon l'une des revendications 11 à 13, **caractérisée en ce qu'**un CRC est calculé et concaténé au premier/second message avant le codage canal, le poinçonnage et la transmission par le premier/second terminal, et que la réussite du décodage du premier/second message par le second/premier terminal est déterminée en comparant le CRC calculé sur la base du premier/second message reçu avec le CRC concaténé.

15. Méthode de génération de clé secrète selon l'une des revendications 11 à 13, **caractérisée en ce qu'**un CRC est calculé sur la base du premier/second message avant le codage canal et le poinçonnage, puis concaténé au message ainsi poinçonné avant transmission et que la réussite du décodage du premier/second message est déterminée en comparant le CRC calculé sur la base du premier/second message avec le CRC concaténé.

## Patentansprüche

1. Verfahren zum Erstellen eines Geheimschlüssels, der von einem ersten Endgerät und einem zweiten Endgerät gemeinsam genutzt wird, wobei das erste und das zweite Endgerät durch einen drahtlosen Kommunikationskanal verbunden sind, wobei das erste Endgerät eine erste Schätzung des Kanals durchführt (110) und das zweite Endgerät eine zweite Schätzung des Kanals durchführt (115), wobei
(a) eine erste Nachricht, die die erste Schätzung darstellt (120), über das erste Endgerät an das zweite Endgerät übertragen wird (141), wobei die erste Nachricht zuvor mit Hilfe einer Kanalcodierung codiert (130) und mit einem ersten Punktiermuster mit einer Punktierrate punktiert wurde (140), die hoch genug ist, um nicht seine Decodierung zuzulassen;
(b) eine zweite Nachricht, die die zweite Schätzung darstellt (125), über das zweite Endgerät abgespeichert wird, wobei die zweite Nachricht zuvor mit Hilfe der Kanalcodierung codiert wurde (135);
(c) die zweite Nachricht wird mit der ersten Nachricht kombiniert wird (155), um die erste Nachricht zu dekodieren (165); und
(d) dann, wenn das Decodieren der ersten Nachricht erfolgreich ist, das zweite Endgerät den Geheimschlüssel anhand der so decodierten ersten Nachricht ermittelt (195).

2. Verfahren zum Erstellen eines Geheimschlüssels nach Anspruch 1, **dadurch gekennzeichnet, dass** dann, wenn die Decodierung der ersten Nachricht erfolgreich ist, das zweite Endgerät eine Bestätigung an das erste Endgerät überträgt und dieses dann den Geheimschlüssel ausgehend von der ersten Nachricht ermittelt.

3. Verfahren zum Erstellen eines Geheimschlüssels nach Anspruch 2, **dadurch gekennzeichnet, dass** das erste Endgerät den Geheimschlüssel durch Anwenden einer Verarbeitung auf die erste Nachricht ermittelt und das zweite Endgerät die gleiche Verarbeitung auf die decodierte erste Nachricht anwendet, um diesen Schlüssel zu erhalten.

4. Verfahren zum Erstellen eines Geheimschlüssels nach Anspruch 1, **dadurch gekennzeichnet, dass** die erste und die zweite Schätzung der Impulsantwort in Form einer Abtastsequenz vorliegen und dass dann, wenn die Decodierung der ersten Nachricht nicht erfolgreich ist, wird die zweite Schätzung der Impulsantwort um mindestens eine Abtastung relativ zu der ersten verschoben wird, und dass die Schritte (b), (c), (d) basierend auf der so verschobenen zweiten Schätzung wiederholt werden.

5. Verfahren zum Erstellen eines Geheimschlüssels nach Anspruch 4, **dadurch gekennzeichnet, dass** die Verschiebung der zweiten Schätzung der Impulsantwort und die Sequenz der Schritte (b), (c), (d) wiederholt wird, bis die Decodierung der ersten Nachricht erfolgreich ist oder die Verschiebung einen vorbestimmten Maximalwert erreicht.

6. Verfahren zum Erstellen eines Geheimschlüssels nach Anspruch 5, **dadurch gekennzeichnet, dass** dann, wenn die Verschiebung den Maximalwert erreicht, ohne dass die Decodierung der ersten Nachricht erfolgreich ist, das zweite Endgerät eine Anfrage zum Übertragen eines Redundanzinkrements an das erste Endgerät sendet.

7. Verfahren zum Erstellen eines Geheimschlüssels nach Anspruch 6, **dadurch gekennzeichnet, dass** das Redundanzinkrement aus Bits besteht, die mit dem ersten Punktiermuster punktiert wurden.

8. Verfahren zum Erstellen eines Geheimschlüssels nach Anspruch 7, **dadurch gekennzeichnet, dass**
(c') das zweite Endgerät zumindest einen Teil der zweiten Nachricht mit der ersten Nachricht kombiniert, die zuvor mit dem Redundanzinkrement vervollständigt wurde, und versucht, die erste Nachricht ausgehend von dieser Kombination zu dekodieren;
(d') dann, wenn das Dekodieren der ersten Nachricht erfolgreich ist, das zweite Endgerät den Geheimschlüssel ausgehend von der so decodierten ersten Nachricht ermittelt.

9. Verfahren zum Erstellen eines Geheimschlüssels nach Anspruch 8, **dadurch gekennzeichnet, dass** das erste Endgerät das Redundanzinkrement nur insofern an das zweite Endgerät überträgt, als die erste Nachricht, die mit diesem Redundanzinkrement vervollständigt ist, nicht-decodierbar bleibt.

10. Verfahren zum Erstellen eines Geheimschlüssels nach Anspruch 9, **dadurch gekennzeichnet, dass** dann, wenn das neue Redundanzinkrement die erste Nachricht decodierbar macht,
- das Redundanzinkrement nicht über das erste Endgerät übertragen wird und letzteres diese Situation dem zweiten Endgerät meldet;
- das erste und das zweite Endgerät jeweils neue erste und zweite Schätzungen der Impulsantwort des Übertragungskanals vornehmen.

11. Verfahren zum Erstellen eines Geheimschlüssels nach Anspruch 1, **dadurch gekennzeichnet, dass** die zweite Nachricht, die zuvor mit Hilfe der Kanalcodierung codiert wurde, mit einem zweiten Punktiermuster mit einer Punktierrate punktiert wird, die hoch genug ist, um nicht ihre Decodierung zuzulassen, und die so punktierte zweite Nachricht an das erste Endgerät übertragen wird.

12. Verfahren zum Erstellen eines Geheimschlüssels nach Anspruch 11, **dadurch gekennzeichnet, dass**:
- das erste Endgerät zumindest einen Teil der ersten Nachricht mit der zweiten Nachricht kombiniert, um die zweite Nachricht zu decodieren; und
- dann, wenn das Dekodieren der zweiten Nachricht erfolgreich ist, das erste Endgerät den Geheimschlüssel ausgehend von der so decodierten zweiten Nachricht ermittelt, soweit es nicht zuvor eine Bestätigung von dem zweiten Endgerät erhalten hat, und eine Bestätigungsnachricht an das zweite Endgerät überträgt;
- das erste Endgerät den Geheimschlüssel ausgehend von der ersten Nachricht ermittelt, wenn es eine Bestätigungsnachricht von dem zweiten Endgerät erhalten hat.

13. Verfahren zum Erstellen eines Geheimschlüssels nach Anspruch 11 oder 12, **dadurch gekennzeichnet, dass**:
- das zweite Endgerät zumindest einen Teil der zweiten Nachricht mit der ersten Nachricht kombiniert, um die erste Nachricht zu decodieren; und
- dann, wenn das Dekodieren der ersten Nachricht erfolgreich ist, das zweite Endgerät den Geheimschlüssel ausgehend von der so decodierten ersten Nachricht ermittelt, soweit es nicht zuvor eine Bestätigung von dem ersten Endgerät erhalten hat, und eine Bestätigungsnachricht an das erste Endgerät überträgt;
- das zweite Endgerät den Geheimschlüssel ausgehend von der zweiten Nachricht ermittelt, wenn es eine Bestätigungsnachricht von dem ersten Endgerät erhalten hat.

14. Verfahren zum Erstellen eines Geheimschlüssels nach einem der Ansprüche 11 bis 13, **dadurch gekennzeichnet, dass** eine CRC vor der Kanalcodierung, der Punktierung und der Übertragung über das erste/zweite Endgerät berechnet und mit der ersten/zweiten Nachricht verknüpft wird, und dass das erfolgreiche Decodieren der ersten/zweiten Nachricht über das zweite/erste Endgerät durch Vergleichen der berechneten CRC basierend auf der ersten/zweiten empfangenen Nachricht mit der verknüpften CRC ermittelt wird.

15. Verfahren zum Erstellen eines Geheimschlüssels nach einem der Ansprüche 11 bis 13, **dadurch gekennzeichnet, dass** eine CRC vor der Kanalcodierung und der Punktierung basierend auf der ersten/zweiten Nachricht berechnet wird und dann vor der Übertragung mit der so punktierten Nachricht verknüpft wird, und dass das erfolgreiche Decodieren der ersten/zweiten Nachricht durch Vergleichen der berechneten CRC basierend auf der ersten/zweiten Nachricht mit der verknüpften CRC ermittelt wird.

## Claims

1. A method of generation of a secret key shared between a first terminal and a second terminal, where the said first and second terminals are connected by a wireless communication channel, and where the first terminal makes (110) a first estimate of the said channel and the second terminal makes (115) a second estimate of the said channel, wherein:
(a) a first message representing (120) the first estimate is sent by the first terminal to the second terminal (141), where the said first message has been previously encoded (130) using a channel encoding, and punctured (140) with a first puncturing pattern, at a sufficiently high puncturing rate that it cannot be decoded;
(b) a second message representing (125) the second estimate is stored by the second terminal, where the said second message has previously been encoded (135) using the said channel encoding;
(c) the said second message is combined (155) with the first message to decode (165) the first message; and
(d) if the decoding of the first message is successful the second terminal determines the secret key (195) from the first message thus decoded.

2. A method of generation of a secret key according to claim 1, **characterised in that** if the decoding of the first message is successful the second terminal sends an acknowledgement to the first terminal, and the latter then determines the secret key from the said first message.

3. A method of generation of a secret key according to claim 2, **characterised in that** the first terminal determines the secret key by applying a computation to the first message, and **in that** the second terminal applies the same computation to the said first decoded message to obtain this key.

4. A method of generation of a secret key according to claim 1, **characterised in that** the first and second estimates of the impulse response take the form of a sequence of samples, and **in that**, if the decoding of the first message is not successful, the second estimate of the impulse response is shifted by at least one sample compared to the first, and **in that** steps (b), (c) and (d) are repeated using the second estimate thus shifted.

5. A method of generation of a secret key according to claim 4, **characterised in that** the shift of the second estimate of the impulse response and the sequence of steps (b), (c) and (d) is iterated until the first message is successfully decoded, or until the shift reaches a predetermined maximum value.

6. A method of generation of a secret key according to claim 5, **characterised in that** if the shift reaches the said maximum value without the first message having been successfully decoded the second terminal sends the first terminal a request for transmission of a redundancy increment.

7. A method of generation of a secret key according to claim 6, **characterised in that** the redundancy increment consists of bits which had been punctured by the first puncturing pattern.

8. A method of generation of a secret key according to claim 7, **characterised in that**
(c') the second terminal combines at least a part of the second message with the first message, previously completed by the said redundancy increment, and attempts to decode the first message from this combination;
(d) if the decoding of the first message is successful the second terminal determines the secret code from the first message thus decoded.

9. A method of generation of a secret key according to claim 8, **characterised in that** the first terminal transmits the redundancy increment to the second terminal only if the first message completed by this redundancy increment is still undecodable.

10. A method of generation of a secret key according to claim 9, **characterised in that** if the new redundancy increment makes the first message decodable:
- the said redundancy increment is not transmitted by the first terminal, and the latter makes this situation known to the second terminal;
- the first and second terminals make, respectively, new first and second estimates of the transmission channel's impulse response.

11. A method of generation of a secret key according to claim 1, **characterised in that** the second message previously encoded using the channel encoding is punctured with a second puncturing pattern, at a sufficiently high puncturing rate for it not to be able to be decoded, and **in that** the second message punctured in this manner is transmitted to the first terminal.

12. A method of generation of a secret key according to claim 11, **characterised in that**:
- the first terminal combines at least a part of the first message with the second message in order to decode the second message; and
- if the decoding of the second message is successful the first terminal determines the secret key from the second message thus decoded, provided it has not previously received an acknowledgement from the second terminal, and transmits an acknowledgement message to the second terminal;
- the first terminal determines the secret key from the said first message, if it has received an acknowledgement message from the second terminal.

13. A method of generation of a secret key according to claim 11 or 12, **characterised in that**:
- the second terminal combines at least a part of the second message with the first message in order to decode the first message; and
- if the decoding of the first message is successful the second terminal determines the secret key from the first message decoded in this manner, provided it has not previously received an acknowledgement from the first terminal, and transmits an acknowledgement message to the first terminal;
- the second terminal determines the secret key from the said second message, if it has received an acknowledgement message from the first terminal.

14. A method of generation of a secret key according to one of the claims 11 to 13, **characterised in that** a CRC is computed and concatenated to the first/second message before channel encoding, puncturing and transmission by the first/second terminal, and **in that** the success of the decoding of the first/second message by the second/first terminal is determined by comparing the CRC computed using the first/second message received with the concatenated CRC.

15. A method of generation of a secret key according to one of the claims 11 to 13, **characterised in that** a CRC is computed using the first/second message before channel encoding and puncturing, and then concatenated to the message punctured in this manner before transmission, and **in that** the success of the decoding of the first/second message is determined by comparing the CRC computed using the first/second message with the concatenated CRC.
